Europäisches Patentamt

**European Patent Office**

Office européen des brevets

(11) Publication number:
**0 219 125**
**A2**

(12) **EUROPEAN PATENT APPLICATION**

(21) Application number: **86114318.8**

(22) Date of filing: **16.10.86**

(51) Int. Cl.⁴: **B 01 D 13/04**

(30) Priority: **16.10.85 US 788137**

(43) Date of publication of application:
**22.04.87 Bulletin 87/17**

(84) Designated Contracting States:
**CH DE FR GB IT Li**

(71) Applicant: **E.I. DU PONT DE NEMOURS AND COMPANY**
**1007 Market Street**
**Wilmington Delaware 19898(US)**

(72) Inventor: **Tadros, Safwat Ebeid**
**7501 Society Drive**
**Claymont Delaware 19703(US)**

(72) Inventor: **Trehu, Yves Michel**
**6 Walnut Ridge Road**
**Wilmington Delaware 19807(US)**

(74) Representative: **Abitz, Walter, Dr.-Ing. et al,**
**Abitz, Morf, Gritschneder, Freiherr von Wittgenstein**
**Postfach 86 01 09**
**D-8000 München 86(DE)**

(54) Coating process for composite reverse osmosis membranes.

(57) A process for preparing reverse osmosis membranes is disclosed. A microporous hollow support fiber is passed through a solution of a monomer capable of undergoing condensation polymerization and such as m-phenylene diamine up through a capillary into a second less dense solution of a second monomer capable of undergoing condensation with said first monomer, such as trimesoyl chloride or cyclohexane-1,3,5-tricarbonyl chloride. The resulting fiber has a polymeric film deposited thereon which is effective as a reverse osmosis membrane.

F I G. 3

EP 0 219 125 A2

## TITLE

# 0219125

COATING PROCESS FOR COMPOSITE REVERSE

OSMOSIS MEMBRANES

## BACKGROUND

### Field of the Invention

The present invention relates to a two step process for forming a polymeric coating on a porous substrate. In the present invention the porous substrate moves from a first bath which applies a first monomer to the porous substrate to a second bath which has a common interphase with the first bath. A second monomer is applied to the substrate in the second bath and the two monomers condensed to form a polymer layer which is effective as a reverse osmosis membrane.

### Prior Art

U.S. 4,277,344 discloses interfacially synthesized reverse osmosis membranes wherein an aromatic polyamide is derived from a monomeric aromatic polyacylhalide which is three fold or higher in acyl functionality and a monomeric arylene polyamine.

### Summary of the Invention

The present invention relates to a process for preparing composite hollow fine fiber reverse osmosis membranes by interfacial polymerization. A porous hollow fiber is passed through a dense solution of one monomer, and without going through a gas phase, through a second less dense solution of another monomer capable of rapid condensation polymerization with the first monomer in the second bath to form a condensation polymer layer on the porous hollow fiber which is effective as a reverse osmosis membrane.

5462

Brief Description of the Drawings

Fig. 1 is a partial cross-section of a spinnerette used to form hollow fibers.

Fig 2. is an overall schematic of the system used to make hollow fibers.

Fig 3. is a cross-section of the apparatus used to form the polymer coating on the hollow fibers.

Detailed Description of the Drawings

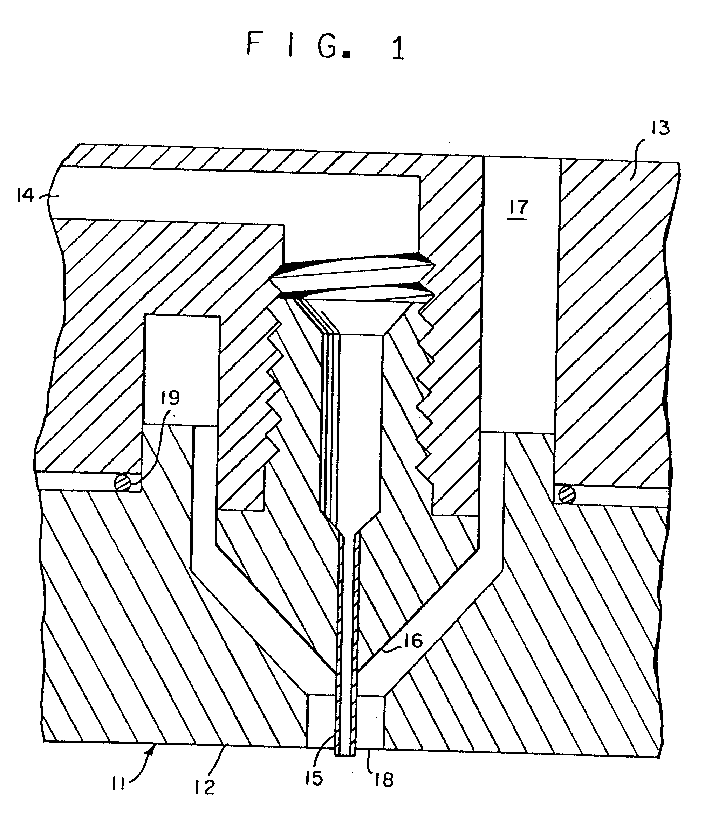

Referring now to Fig. 1, a spinnerette for spinning hollow fibers is indicated generally as 11 spinnerette consists of die 12, and block 13 which are held together by bolts, not shown. The fluid which is to be fed to the center of the hollow fiber is fed through passage 14 in block 13 to hollow tip 15. Hollow tip 15 is held in block 13 by retainer 16. Fluid which is to form the hollow fiber is fed through passage 17 in block 13 and out die opening 18. Hollow tip 15 is adjusted within die opening by differential tightening of the bolts holding die 12 to block 13 with the flexibility for so doing being provided by metal ring 19.

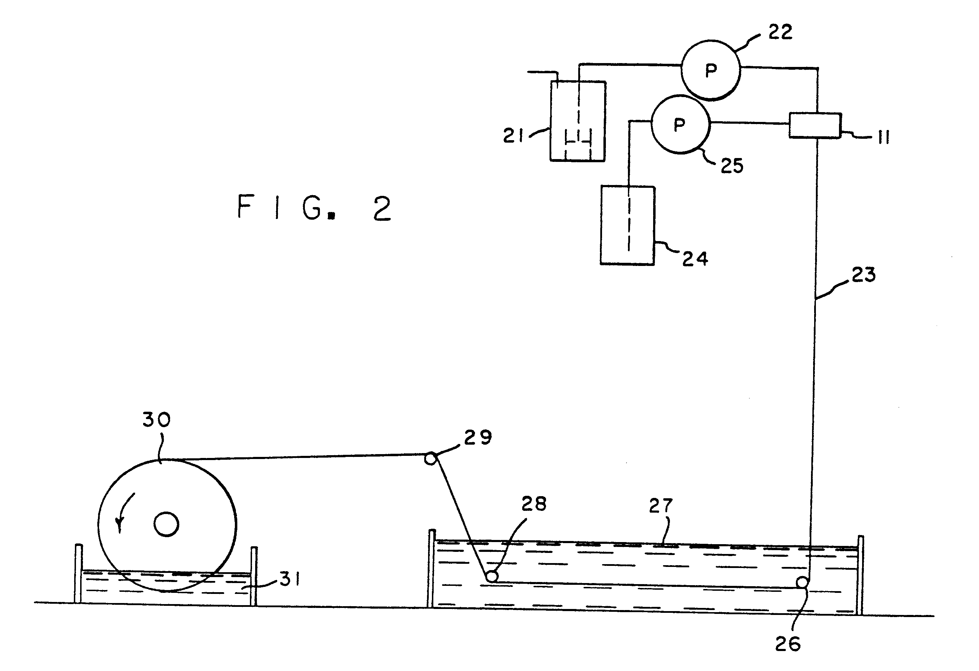

Referring now to Fig 2, a solution of the polymer which is to form the hollow fiber is pumped from reservoir 21 by means of gear pump 22 to die 11. The fluid which forms the center of the hollow fiber 23 is pumped from reservoir 24 by means of gear pump 25 to die 11. Hollow fiber 23 is removed from die 11 and drawn over pin 26 in quench bath 27. Hollow fiber is drawn over pin 28, removed from quench bath 27, drawn over pin 29 and taken up on take-up reel 30 rotating partially in bath 31.

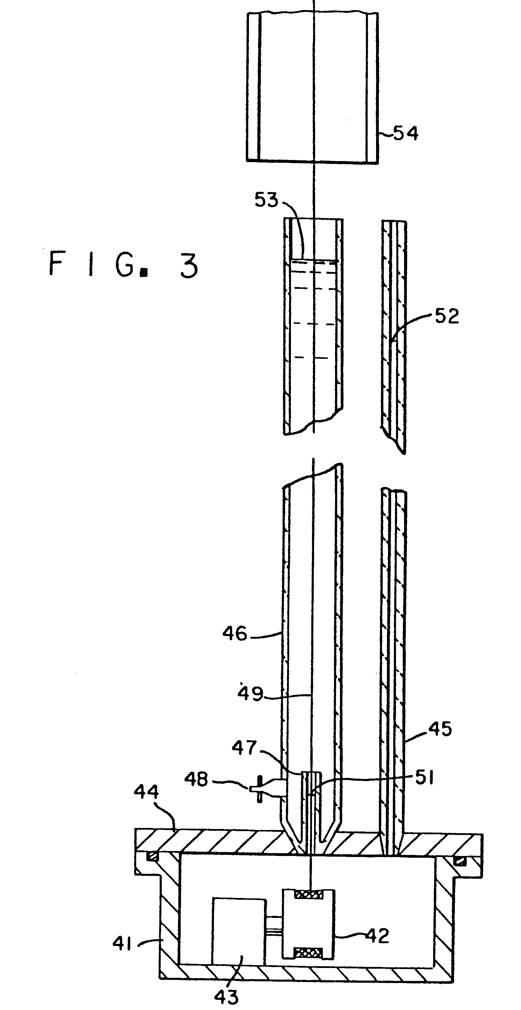

Referring now to Fig 3, container 41 is fitted with bobbin 42 mounted in bearing and support 43. Container 41 is completely filled with a first solution of monomer. Lid 44 is mounted on container 41, and receives capillary 45 and tube 46. Tube 46 is fitted with capillary 47 and drain 48. Hollow fiber 49 is removed from bobbin 42 through a solution of m-phenylenediamine in water in container 41 and through a solution of trimesoyl chloride or cyclohexane-1,3,5,-tricarbonyl chloride in an organic solvent in tube 46. The interface 51 between the two solutions is maintained in capillary 47 by maintaining levels 52 and 53 of the solutions at the proper height in capillary 45 and tube 46. After leaving tube 46 hollow fiber 49 is passed through drier 54.

Detailed Description

Composite reverse osmosis membranes have potentially higher fluxes and better mechanical properties than homogeneous asymmetric membranes. A practical technology already developed uses interfacial polymerization wherein a porous substrate moves from a first bath through a gas phase (air) into a second bath where the interfacial polymerization takes place. When this technology is applied to a porous hollow fine fiber substrate, one finds that for practical fiber dimensions with an outside diameter of less than 300 μm no salt rejecting layer of polymer can be obtained because of the difficulty of keeping the substrate sufficiently wet between the two baths. It has now been found that this problem can be solved, and a fiber useful in reverse osmosis be prepared by providing a common liquid-liquid interface between the two baths and moving the fiber directly from the first bath into the second bath without passage through a gas phase. The interface preferably is maintained in a vertically disposed zone of reduced size such as a capillary of 1 to 100 mm inside diameter and preferably 3-8 mm inside diameter.

4

The support hollow fiber or support film may be drawn substantially vertically either up or down through a first bath containing one of the condensation monomers into a second bath containing the complimentary monomer. The solvents used in the two baths should be immiscible with each other. The solvent in the lower bath is denser than the solvent in the upper bath. Normally the polyfunctional amine is applied first for which the preferred solvent is water. The preferred polyfunctional amine for use herein is m-phenylenediamine which generally is present in an amount of from 0.5 to 10 wt % of the solvent.

Upon exiting the microporous substrate passes through a liquid-liquid interface into a bath containing the complementary condensation polymerization monomer. If the microporous substrate is traveling upwardly the solvent in the second bath is preferably less dense than the solvent in the first bath. If the microporous substrate is traveling downwardly the solvent in the second bath preferably is denser than the solvent in the first bath. For upward travel of the microporous substrate the preferred solvents are the hydrocarbons. Preferred hydrocarbon solvents are those having the formula $C_nH_{2\,n+2}$ where n is 4 to 8. Hexane is an especially preferred solvent. For downward travel of the microporous substrate the preferred solvents are the chlorofluorocarbons such as 1,1,2-trichloro-1,2,2-trifluoroethane. Using a small capillary and balancing pressure heads, it is possible to travel upwardly in this case also. Generally the monomer in the second bath will be present in an amount of from 0.01 to 2 wt % of the solvent, with from 0.1 to 0.5 wt % based on solvent being the preferred range. The preferred monomers are trimesoyl chloride and cyclohexane-1,3,5-tricarbonyl chloride. With the preferred monomers the reaction can be carried out at room temperature, although temperatures of from 5° to 80°C can readily be used.

The permselective hollow fibers of the present invention comprise a polymeric microporous support such as a polysulfone or polyvinyl chloride and in intimate occluding contact with said support a permselective polyaramide. Generally the permselective polyaramide will be from 50 to 2500A°m in thickness.

The hollow fiber generally will have an outside diameter of from 75 to 600 µm and an inside diameter of from 25 to 300 µm with a wall thickness of from 25 to 300 µm. The preferred hollow fibers have an outside diameter of from 150 to 250 µm, an inside diameter of from 50 to 150 µm and a wall thickness of from 25 to 100 µm.

## Examples

Example 1

A polysulfone hollow fine fiber is prepared by spinning from a die such as shown in Fig 1, and the spinning set up shown in Fig 2. A solution of a polysulfone derived from bisphenol A and p,p'-dichlorodiphenyl sulfone having a molecular weight of about 35,000 is used as the spinning solution. In Example 1 the spinning solution contained 27% polysulfone, 20% polyvinylpyrrolidone and the remainder a 3/1 mixture of dimethyl formamide and tetrahydrofuran. In Examples 2-5 the spinning solution contained 27% polysulfone, 10% polyvinylpyrrolidone and the remainder a 3/1 mixture of dimethyl formamide and tetrahydrofuran. The die had an outside diameter of 0.008 inch ($2\times10^{-5}$ M).
A mixture of 60% dimethyl formamide and 40% water is
fed into the bore of the fiber. The quench tank
contains water at room temperature. The speed with
which the hollow fiber is moved is varied to provide
fibers of the diameter reported in the Table.

The fibers are then coated using the
apparatus shown in Fig 3. The lower chamber has the
substrate fiber on a bobbin immersed in 2 wt %
aqueous solution of m-phenylenediamine. Tube 46
contains a 0.25 wt. % solution of trimesoyl chloride
in cyclohexane. Capillary tube 47 has an inside
diameter of 5 mm. The interface is maintained at a
constant level within capillary tube 47. The fiber
is drawn up through the interface where an aromatic
polyamide film is formed; the fiber is then drawn
through drier 54 maintained at 60° to 70°C depending
on the solvent used in 46 and finally collected on a
take-off drum. The interface between the two
solutions is maintained in capillary tube 47 by
adding m-phenylene diamine solution to the apparatus.

TABLE

| Ex No. | OD m | ID m | Reaction Time sec | Kw $\bar{x}$ Uncoated m/sec•TPa | Kw Coated m/sec•TPA | Salt Rejection % |
|---|---|---|---|---|---|---|
| 1 | 210 | 100 | 15 | 5 | 0.06 | 90 |
| 2 | 190 | 110 | 12 | 0.6 | 0.09 | 89 |
| 3 | 190 | 110 | 8 | 0.6 | 0.36 | 96 |
| 4 | 205 | 105 | 12 | 0.4 | 0.08 | 87 |
| 5 | 205 | 105 | 8 | 0.4 | 0.2 | 91 |

$\bar{x}$ Kw is the flux constant for a given hollow fiber.
That is a measure of the amount of water that flows
through the fiber under a given set of conditions.
The flux units are cubic meters of water per square
meter of hollow fiber surface in square meters, per
second times Pa x $10^{12}$. This cancels out to m/sec·TPa.

Claims:                                                    0219125

1. A process for preparing a permselective membrane comprising feeding a microporous support membrane through a first solution containing from 0.5 to 10 weight percent of a condensation monomer, feeding said microporous hollow support membrane generally vertically through a horizontally disposed liquid-liquid interface and into a second solution which is immiscible with said first solution and which contains from 0.01 to 2 weight percent of a monomer capable of rapidly polymerizing with said first monomer at the operating temperature while in said second solution.

2. The process of Claim 1 wherein the microporous support is in the form of a hollow fiber.

3. The process of Claim 2 wherein the liquid-liquid interface is in a capillary.

4. The process of Claim 3 wherein the first monomer is a diamine.

5. The process of Claim 4 wherein the second monomer is a polyfunctional acid chloride.

6. The process of Claim 5 wherein the diamine comprises m-phenylene diamine.

7. The process of Claim 6 wherein the polyfunctional acid chloride comprises trimesoyl chloride or cyclohexane-1,3,5-tricarbonyl chloride.

8. The process of Claim 7 wherein the solvent in the first bath is water.

9. The process of Claim 8 wherein the solvent in the second bath is hydrocarbon in nature.

10. The process of Claim 9 wherein the solvent in the second bath has the formula $C_nH_{2n+2}$ where n is 4 to 8.

11. A hollow fiber reverse osmosis membrane comprising a polymeric microporous support member and

5462

in occluded contact therewith a permselective aromatic polyamide which hollow fiber has an outside diameter of from 75 to 600 µm.

12. The hollow fiber of Claim 11 wherein the outside diameter of the fiber is from 150 to 250 µm.

13. The hollow fiber of Claim 12 wherein the permselective polyamide consists essentially of repeating units derived from m-phenylenediamine and either trimesoyl chloride or cyclohexane-1,3,5-tricarbonyl chloride.

14. The hollow fiber of Claim 13 wherein the microporous support is a polysulfone.

F I G. 1

F I G. 2

0219125

F I G. 3